# EUROPEAN PATENT SPECIFICATION

(11) **EP 3 646 166 B1**
(45) Date of publication and mention of the grant of the patent: **07.08.2024**
(21) Application number: 18822693.0
(22) Date of filing: 05.06.2018
(51) Int. Cl.: G06F 8/30, G06F 11/36

(54) **DEVELOPER EXPERIENCE RELEVANT TO A VARIATION OF AN APPLICATION PROGRAMMING INTERFACE**
FÜR EINE VARIATION EINER ANWENDUNGSPROGRAMMIERSCHNITTSTELLE RELEVANTE ENTWICKLERERFAHRUNG
EXPÉRIENCE DE DÉVELOPPEUR APPROPRIÉE À UNE VARIANTE D'UNE INTERFACE DE PROGRAMMATION D'APPLICATION

(30) Priority: 28.06.2017 US 201715635946
(43) Date of publication of application: 06.05.2020
(73) Proprietor: Intuit Inc., Mountain View, CA 94043 (US)
(72) Inventor: NADIG, Deepak, Mountain View, California 94043 (US); KHARE, Rajat, Bangalore 560 103 (IN); SAIMANI, Jayanth, Bangalore (IN)
(74) Representative: D Young & Co LLP
(86) International application number: PCT/US2018/036094
(87) International publication number: WO 2019/005434

(56) References cited:
- EP-A1- 2 023 244
- WO-A1-2014/204987
- US-A1- 2005 091 660
- US-A1- 2015 261 525
- US-A1- 2016 085 521
- US-A1- 2017 168 918

## Description

### Field

Embodiments presented herein generally relate to software development tools, and more specifically, to providing developer experience information relevant to a variant of an application programming interface (API).

### Description of the Related Art

Application programming interfaces (APIs) generally expose various routines and methods to software developers for use in obtaining and modifying data using features of a software application. These APIs may be accessible programmatically (e.g., as function calls programmed in an application or function library) or via a web resource for web-based applications. Web-based applications can invoke functionality exposed by an API, for example, using a Representational State Transfer function call (a RESTful function call), queries encapsulated in an HTTP POST request, a Simple Object Access Protocol (SOAP) request, or other protocols that allow client software to invoke functions on a remote system.

In some cases, such as software systems that are used globally and are subject to different operational requirements for different variability dimensions (e.g., geographical regions, industries, business types, business sizes, and so on) in which the software systems are used, the operational requirements for those regions may be hard-coded in application source code or provided as configuration information. For example, in an invoice generation workflow, tax rates applicable to provided goods and services, tax authorities that impose taxes on goods and services, required information in an invoice, and the like may differ based on a jurisdiction in which the organization that generates the invoice is located. As the operational requirements change, parameters in application source code or configurations are generally changed to reflect the changed operational requirements (e.g., changes in tax rates, goods and/or services to which tax is applied, changes in tax authorities, and so on).

Developer experience (DX) for APIs generally refers to the experience of a developer in finding, studying, integrating with, using, testing, monitoring, and diagnosing issues with APIs. A DX may include API documentation, tutorials, assisted and automated support, software development kit (SDK) libraries, test sandbox environments, monitoring/diagnostic tools, and the like. A DX may be presented through interfaces such as dashboards or portals. In many cases, API providers offer, through a developer portal, a uniform DX across all possible API variations. While uniform presentation of a DX through a developer portal may work for APIs with small amounts of variability, it can be problematic when higher degrees of variability are introduced (e.g., as discussed above, the use of different variations of the same API to accommodate different operational requirements for different geographical regions in which a system operates). When a single DX is provided regardless of the variations present across different variants of an API, an API provider may not provide relevant information for a specific variability dimension a developer is using to develop an application (e.g., features that are available for the specific variability dimension).

US 2005/091660A1 relates to 'Design of application programming interfaces (APIS)'.

### SUMMARY

Particular aspects are set out in the appended independent claims, with various optional embodiments being set out in the dependent claims.

One embodiment of the present disclosure includes a computer-implemented method for providing developer experience information specific to a variation of an application programming interface (API), comprising: receiving (210) a request from a developer for developer experience information related to the API, wherein the request comprises developer credentials; identifying (220), based on the request and based on a stored correlation between one or more characteristics and the API variation, an API variation that is relevant to the developer by determining the one or more developer characteristics based on a user profile accessed using the developer credentials provided with the request, wherein the API variation corresponds to a particular set of developer experience information available for a particular set of developer characteristics; selecting (230), based on the API variation, the developer experience information specific to the API variation, wherein the developer experience information comprises at least one of: API documentation; and one or more software development kit (SDK) libraries; and providing (240) the developer with the developer experience information via a custom developer experience interface in order to assist the developer in using the API variation.

Another embodiment of the present disclosure includes a processor and a memory storing a program, which, when executed on the processor, performs the method for providing developer experience information relevant to a variation of an application programming interface (API).

Still another embodiment provides a non-transitory computer-readable storage medium having instructions, which, when executed on a processor, performs the method for providing developer experience information relevant to a variation of an application programming interface (API).

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only exemplary embodiments and are therefore not to be considered limiting of its scope, and may admit to other equally effective embodiments.
Figure 1 illustrates an example computing environment in which certain embodiments of the present disclosure may be implemented.
Figure 2 illustrates example operations for providing developer experience information relevant to a variation of an application programming interface (API).
Figure 3 illustrates a signal flow between a developer device, a server, and a database related to providing developer experience information relevant to a variation of an application programming interface (API).
Figure 4 illustrates a computer system with which a developer device of the present disclosure may be implemented.
Figure 5 illustrates a computer system with which a server of the present disclosure may be implemented.

### DETAILED DESCRIPTION

In order to provide a developer experience tailored to a specific API variation used by a developer from a group of API variations, embodiments of the present disclosure involve customizing the developer experience for the API variation which is relevant to a particular developer. Information about the developer, such as preferences specified by the developer, may be gathered and used to identify the API variation relevant to the developer. The developer experience may then be customized based on the information about the developer such that the development information (e.g., documentation and libraries) provided to the developer is pertinent to the specific API variation that the developer is using to develop and maintain an application.

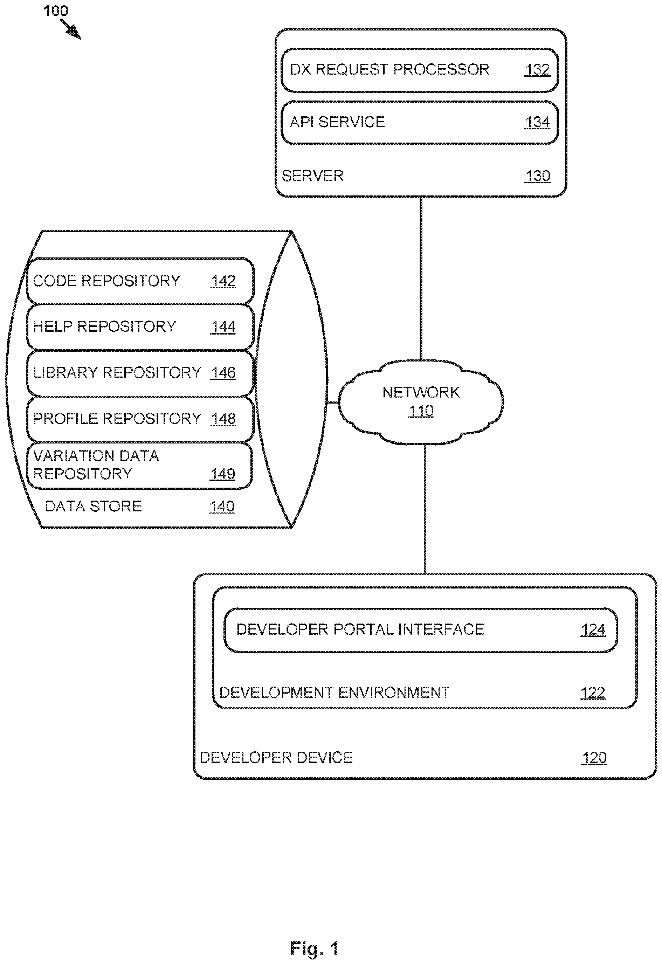

Figure 1 illustrates an example computing environment 100 in which certain embodiments of the present disclosure may be implemented. Computing environment 100 includes a developer device 120, a server 130, and a data store 140, each device being connected via network 110 (e.g., the internet). Developer device 120 is provided by server 130 with a developer experience via developer portal interface 124 within development environment 122, and server 130 retrieves relevant developer information from database 140 to provide to developer device 120.

In some embodiments, developer device 120 comprises a computing device such as a laptop or desktop computer, mobile phone, PDA, or tablet. Developer device 120 includes a development environment 122, which includes a code editor, compiler/debugger, and the like, that allows users to build, edit, and test code under development. Development environment 122 includes developer portal interface 124, by which the developer finds, studies, uses, and tests APIs. In some embodiments, developer portal interface 124 is a local interface to a developer portal which is hosted remotely (e.g., by server 130 or database 140), and the developer portal may be accessed over the internet using a web browser external to or within a software development program.

A developer using developer device 120 may use developer portal interface 124 to access a developer portal which provides the developer with developer experience information such as documentation, software development kit (SDK) libraries, support, testing tools, and other content related to APIs. The developer experience information on the developer portal may, for instance, be hosted by data store 140 and provided by server 130, which may be operated by a software company which provides APIs to developers. In embodiments of the present disclosure, the information presented by the developer portal may be customized for the particular developer based, for instance, on preferences defined by the developer (e.g. entered by the developer through developer portal interface 124 on developer device 120), information about the variation of an API the developer is using to build and test software, and the like.

Developer device 120 may, for example, request developer experience information from server 130 as needed in order to provide the information to the developer through developer portal interface 124 (e.g., when a user invokes a search or help session from a development tool within development environment 122 used to write or edit code).

Server 130 may, for example, comprise a physical or virtual server maintained by a software company which provides APIs to developers. Server 130 may provide a developer experience (e.g., via a developer portal), and may also receive and respond to API calls (e.g., from developer device 102). The functional components of server 130 may include a DX request processor 132 and an API service 134.

DX request processor 132 may receive, handle, and respond to requests for developer experience information (e.g., from developer device 120). For example, when a developer access the developer portal through developer portal interface 124, developer device 120 may transmit a request for developer experience information to server 130 in order to populate the developer portal with relevant information. In some embodiments, the request includes developer credentials (e.g., username and password entered by the developer upon accessing the developer portal) associated with a developer account. DX request processor 132 may receive the request and determine the API variation which is relevant to the developer based on the request. For example, DX request processor 132 may use the developer credentials to access a developer profile on data store 140, and use the information in the developer profile to identify the API variation relevant to the developer. The developer profile may include information such as geographic location (e.g., the city, state, and/or country of interest to the developer), industry, market, business size, and other preferences (e.g., shipping settings for the developer's business). The API variation may be identified based on a correlation stored in variation data repository 149 between the information in the developer profile and the API variation (e.g., variation data repository 149 may store a correlation between a particular API variation and the specific geographic region and industry identified in the developer profile).

Once the relevant API variation has been identified, DX request processor 132 may retrieve the pertinent developer experience information (e.g., documentation, SDK libraries, support information, and the like) from various repositories of data store 140 in order to provide a developer experience which is specific to the API variation relevant to the developer. The developer experience information may be transmitted by DX request processor 132 to developer device 120, and provided to the developer through developer portal interface 124.

API service 134 may perform the general API functions of receiving and responding to API calls (e.g., from developer device 120). For example, API service 134 may identify data requested by the API call, retrieve the data from data store 140, and provide the data in response to developer device 120. In some embodiments, API service 134 may identify the API variation relevant to the developer (e.g., based on developer credentials or other information associated with the API call) in order to retrieve and provide data specific to the API variation in response to the API call.

Data store 140 may, for example, comprise a data storage entity (e.g., database) which is accessible over network 110. Data store 140 may comprise a plurality of repositories which store different types of data, including code repository 142, help repository 144, library repository 146, profile repository 148, and variation data repository 149.

Code repository 142 may store source code for a software system which is invoked by API calls. For example, API service 134 on server 130 may retrieve code from code repository 142 in order to execute methods in response to API calls received from developer device 120. Help repository 144 may store help information and documentation related to the API which may be retrieved by DX request processor 132 in response to requests for help information received from developer device 120. Library repository 146 may store software development kit (SDK) libraries which may be retrieved by DX request processor in response to a request for developer experience information received from developer device 120.

Profile repository 148 may store user profile information for developers who have user profiles with the software system. For example, a developer may create a user profile upon first accessing the developer portal through developer portal interface 124, and may define a plurality of user preferences which are stored in association with the developer's user account in profile repository 148. User preferences may include, for example, geographic location, industry, business type, business size, shipping settings, and the like. User profiles may be secured using credentials, such as usernames and passwords, created by the developers. In some embodiments, user profiles may comprise active directory profiles. DX request processor 132 may retrieve a developer's user preferences from profile repository 148 when determining the API variation which is relevant to the developer.

Variation data repository 149 may store information about API variations, which information from the other repositories is relevant to particular API variations, and which developer characteristics (e.g., user preferences) correspond to which API variations. For example, for each API variation, variation data repository 149 may store information which identifies relevant code from code repository 142, relevant help information from help repository 144, relevant SDK libraries from library repository 146, and relevant developer characteristics such as user preferences from profile repository 148. DX request processor 132 may, after receiving a request for developer experience information from developer device 120, use the credentials provided with the request to retrieve the developer's user profile from profile repository 148, and compare the user preferences in the user profile to information stored in variation data repository 149 in order to identify the API variation relevant to the developer. For example, different API features may be enabled for different geographic regions or different industries. If the API is associated with tax software, for instance, the different taxation rules in different jurisdictions may result in different documentation and the like for different API variations. For example, there may be different constraints on entities within the API, and so the developer experience information may also vary accordingly.

While the various components of computing environment 100 are depicted separately in Figure 1, one or more of the components may be implemented either together or separately, or certain functions may be distributed across a plurality of physical or virtual devices.

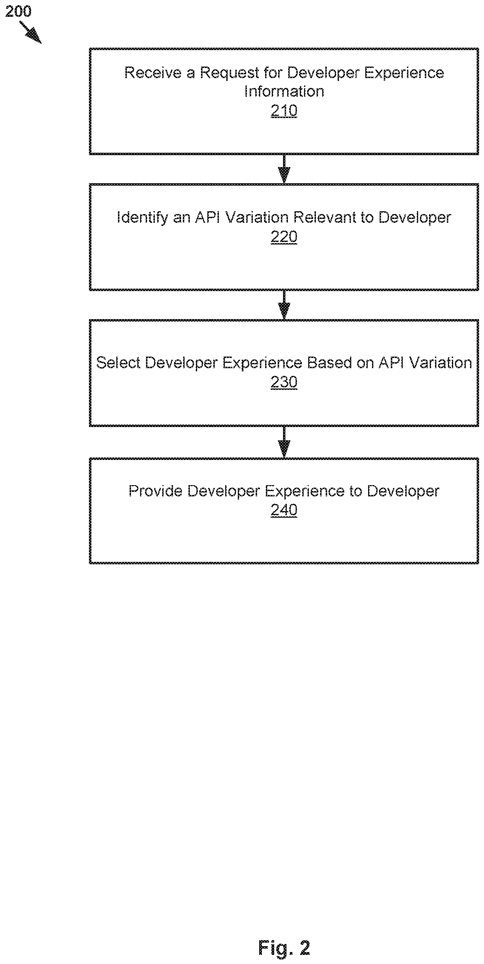

Figure 2 illustrates example operations 200 for providing a developer experience relevant to a variation of an API according to certain embodiments. Operations 200 may, for example, be implemented by server 130. For example, a developer using developer device 120 may access the developer portal through developer portal interface 124 within development environment 122. Alternatively, a developer may access another feature of development environment 122, such as requesting documentation from within various informational and editing panes in development environment 122 (e.g., by clicking on a method in code within a text editor of a software development tool and requesting additional information, requesting additional information about an error message in a debugging panel or a compiler error panel), and the like. Server 130 receives a request for developer experience information from developer devoce 120 (e.g., the request may be generated based on the developer's actions), and server 130 performs operations 200 in response in order to provide a relevant developer experience.

At 210, server 130 receives a request for developer experience information. For example, developer device 120 may transmit a request for developer experience information to server 130. The request comprises developer credentials (e.g., a username and password entered by the developer upon logging into the developer portal).

At 220, server 130 identifies an API variation relevant to a developer. Server 130 identifies the API variation relevant to the developer by determining developer characteristics, for example developer preferences. Server 130 uses the developer credentials included in the request to access the developer's user profile in the profile repository 148 on data store 140. The developer's user preferences within the user profile may include such characteristics as geographic location (e.g., the city, state, and/or country of interest to the developer), industry, market, business size, and other preferences (e.g., shipping settings).

In some embodiments, server 130 may also or alternatively determine some developer characteristics which are not identified within the developer's user profile. For example, the developer's geographic location may be inferred from the developer's IP address. In some cases, developer characteristics may be explicitly specified in a request for developer experience information. Where developer characteristics are explicitly specified in a request for developer experience information, the developer characteristics may override characteristics included in a developer profile or inferred from information not included in the developer profile.

A different set of API features may be available for different sets of developer characteristics, and so each combination of characteristics may correspond to a particular API variation. For example, development which targets a financial services business in the United States may use a different set of API features than a retail business in France. As such, the developer's user preferences and other characteristics are used to identify a particular API variation relevant to the software under development. The API variation may be identified by comparing the developer characteristics to information stored in variation data repository 149 (e.g., based on an association stored in variation data repository 149 between a particular set of developer characteristics and a particular API variation).

At 230, server 130 selects a developer experience based on the API variation relevant to the developer. This may involve, for example, determining the particular set of developer information from the various repositories of data store 140 which corresponds to the API variation. The determination may be made based on a correlation between API variations and developer experience information maintained, for example, in variation data repository 149 in database 140. The developer experience information includes such information as API documentation, SDK libraries, testing environments, and support data, all of which may be stored in repositories of data store 140. Server 130 may retrieve this developer experience information from data store 140.

At 240, server 130 provides the developer experience to the developer by transferring the developer experience information to developer device 120 (e.g., through the developer portal which is accessed by the developer through developer portal interface 124). The developer may then have access to the most relevant developer information to the API variation which the developer is using. As such, the developer will know, based on the documentation and other information, which features are available, what constraints apply (e.g. min/max values on specific elements), and other information about how to use the relevant API variation.

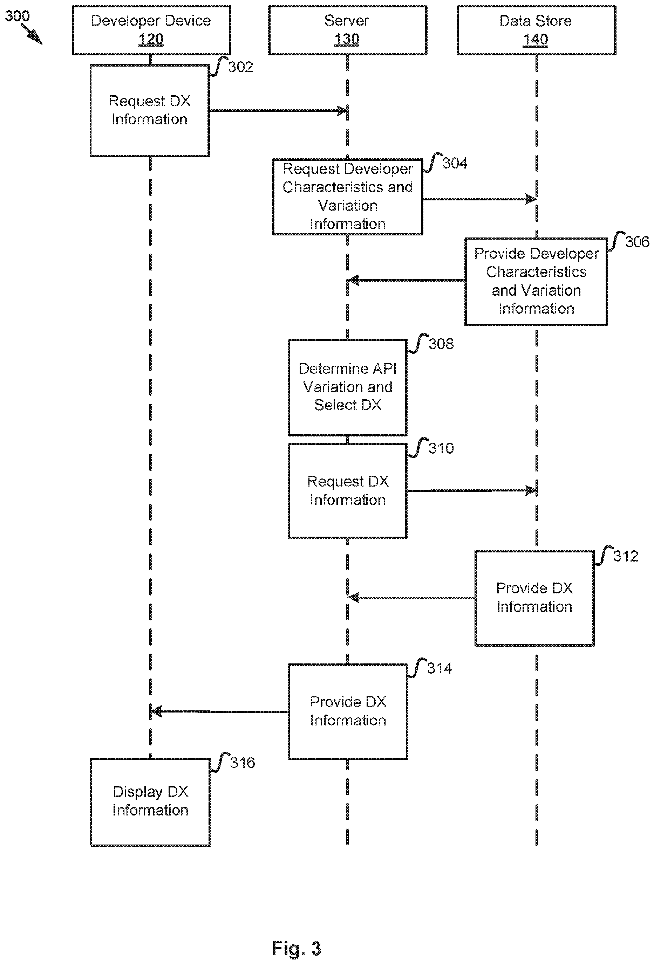

Figure 3 illustrates a message flow 300 between developer device 120, server 130, and data store 140 related to providing a developer experience for an API with variability.

At 302, developer device 102 requests DX information from server 130. This may take place automatically, for example, when a developer logs into developer portal interface 124 on developer device 120, or when the developer launches a particular feature of development environment 122. In some embodiments, the developer's user preferences have already been defined in advance (e.g., when the developer first created a user profile), and may be stored in profile repository 148 of data store 140. Credentials associated with the developer's user profile are included with the request for DX information which is sent to server 130.

At 304, in response to message 302, server 130 requests developer characteristics and variation information from data store 140. Developer characteristics may comprise the developer's user preferences within a user profile stored in profile repository 148 of data store 140. For example. Server 130 may use the credentials included in message 302 to access the developer's user profile and retrieve the developer's user preferences. In some embodiments, certain developer characteristics may also be inferred by server 130 from message 302 (e.g., based on the developer's IP address, the developer's past interactions, such as exclusively working with APIs in a particular geographic region, or based on the developer's membership in a particular user group). Variation information may comprise information identifying the developer characteristics which correspond to particular API variations, and the DX information from other repositories which is relevant to particular API variations. Variation information may, for instance, be stored in variation data repository 149 of data store 140.

At 306, in response to message 304, data store 140 provides the developer characteristics and variation information to server 130. This may be done, for example, by using the credentials to retrieve developer preferences from the developer's user profile in profile repository 148 and variation information from variation data repository 149. For example, all variation data which relates to the developer characteristics retrieved from profile repository 148 (e.g., identified by correlations stored within variation data repository 149) may be retrieved from variation data repository 149 and provided to server 130 along with the developer characteristics.

At 308, in response to message 306, server 130 determines the API variation relevant to the developer and selects a DX based on the API variation. For example, server 130 may analyze the developer characteristics and the variation information in order to identify the particular API variation which is relevant to the developer (e.g., based on correlations between developer characteristics and API variations identified by the variation information). The DX may comprise a plurality of DX information which is pertinent to the identified API variation (e.g., the documentation which describes the identified API variation specifically), and may also be identified by the variation information.

At 310, server 130 requests the DX information identified at 308 above from data store 140. For example, server 130 may request a particular set of documentation, SDK libraries, testing environments, and support data from the various repositories of data store 140 in order to provide the appropriate developer experience.

At 312, in response to message 310, data store 140 provides the requested DX information to server 130. For example, data store 140 may retrieve the requested DX information from its various repositories and transmit the DX information to server 130.

At 314, server 130 provides the DX information received from message 312 to developer device 120. For example, server 130 may populate relevant fields in the developer portal with the DX information (e.g., fields reserved for API documentation may be populated with the documentation received from data store 140), and the developer may access the DX information through developer portal interface 124 on developer device 120.

At 316, the DX information is displayed to the developer. For example, the developer may view and access the DX information through developer portal interface 124, and the DX information may be displayed in response to interactions by the developer (e.g., when the developer clicks on a particular documentation link, the relevant documentation is shown to the developer in the developer portal or other part of the development environment 122).

The developer experience may also include automated and assisted support. For example, help topics which are relevant to the particular API variation used by the developer may be provided to the developer upon request (e.g., by server 130 in response to search terms entered by the developer into a search bar on a help page via developer portal interface 124). Furthermore, if the developer contacts a support professional for assisted support, the support professional may be provided (e.g., via server 130) with information identifying the API variation which is relevant to the developer, and so may be able to provide more relevant and useful assistance.

Other aspects of the developer experience may be customized for the API variation as well. For example, a test sandbox environment provided through the developer portal may be customized for the API variation. Test sandbox environments may comprise, for example, virtual environments that execute within an integrated development environment to allow for user testing of a software project. Test conditions and environmental constraints within the test sandbox environment may reflect the conditions of the API variation, and so the developer may be able to engage in more effective testing of applications developed with the API variation. Header files may be prepopulated based on the relevant API variation. In some embodiments, server 130 may instruct developer device 120 regarding how to configure development environment 122 for the relevant API variation when the developer first launches development environment 122. All of these aspects of the developer experience may be provided automatically and seamlessly to the developer, so that the developer does not need to sort through unnecessary or irrelevant information.

Embodiments of the present disclosure may be implemented as one or more microservices provided through one or more backend servers (e.g., server 130). The components which provide a customized developer experience (e.g., server 130 and database 140) may be the same or different than those which handle API calls and perform other API functionality (e.g., these other functions may be performed by additional servers which are not depicted).

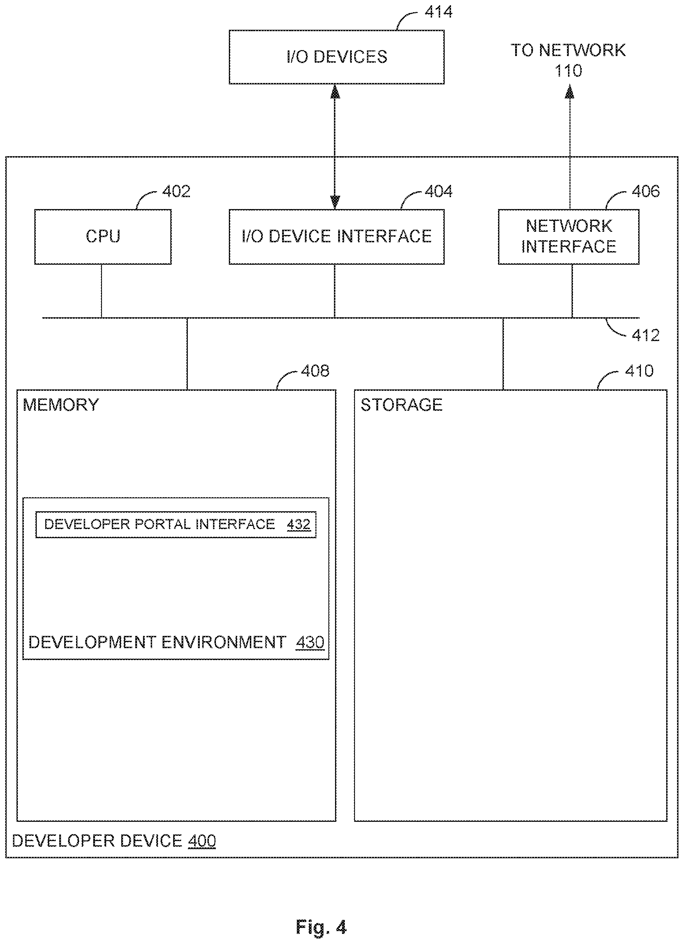

FIG. 4 illustrates an example of an electronic system 400 with which a developer device may be implemented. For example, as shown, the system 400 includes, without limitation, a central processing unit (CPU) 402, one or more I/O device interfaces 404 which may allow for the connection of various I/O devices 414 (e.g., keyboards, displays, mouse devices, pen input, etc.) to the system 400, network interface 406, a memory 408, storage 410, and an interconnect 412.

CPU 402 may retrieve and execute programming instructions stored in the memory 408. Similarly, the CPU 402 may retrieve and store application data residing in the memory 408. The interconnect 412 transmits programming instructions and application data, among the CPU 402, I/O device interface 404, network interface 406, memory 408, and storage 410. CPU 402 is included to be representative of a single CPU, multiple CPUs, a single CPU having multiple processing cores, and the like. Additionally, the memory 408 is included to be representative of a random access memory. Furthermore, the storage 410 may be a disk drive, solid state drive, or a collection of storage devices distributed across multiple storage systems. Although shown as a single unit, the storage 410 may be a combination of fixed and/or removable storage devices, such as fixed disc drives, removable memory cards or optical storage, network attached storage (NAS), or a storage area-network (SAN).

As shown, memory 408 includes a development environment 430, which comprises a developer portal interface 432. Development environment 430 may comprise, for example, a plurality of developer tools which assist a developer in tasks related to software development (e.g., compilers, test sandbox environments, and the like). Developer portal interface 432 may comprise a local interface by which a developer accesses a developer portal populated with remotely hosted DX information. Developer device 400 may request DX information from a server (e.g., by transmitting request messages via network interface 406) in response to interactions by the developer with aspects of development environment 430. DX information may be displayed to the developer via I/O devices 414.

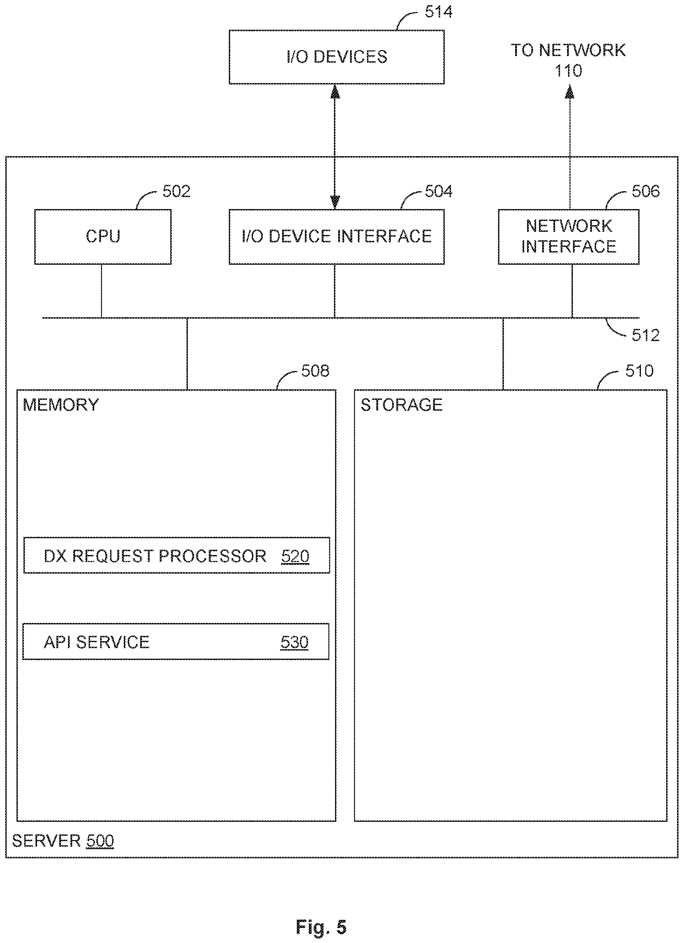

FIG. 5 illustrates an example of an electronic system 500 with which a server may be implemented. For example, as shown, the system 500 includes, without limitation, a central processing unit (CPU) 502, one or more I/O device interfaces 504 which may allow for the connection of various I/O devices 514 (e.g., keyboards, displays, mouse devices, pen input, etc.) to the system 500, network interface 506, a memory 508, storage 510, and an interconnect 512.

CPU 502 may retrieve and execute programming instructions stored in the memory 508. Similarly, the CPU 502 may retrieve and store application data residing in the memory 508. The interconnect 512 transmits programming instructions and application data, among the CPU 502, I/O device interface 504, network interface 506, memory 508, and storage 510. CPU 502 is included to be representative of a single CPU, multiple CPUs, a single CPU having multiple processing cores, and the like. Additionally, the memory 508 is included to be representative of a random access memory. Furthermore, the storage 510 may be a disk drive, solid state drive, or a collection of storage devices distributed across multiple storage systems. Although shown as a single unit, the storage 510 may be a combination of fixed and/or removable storage devices, such as fixed disc drives, removable memory cards or optical storage, network attached storage (NAS), or a storage area-network (SAN).

As shown, memory 508 includes a DX request processor 520 and an API service 530. DX request processor 520 may, for instance, receive, handle, and respond to DX information requests (e.g., received from network 110 via network interface 506). DX request processor 520 may identify an API variation relevant to the developer requesting DX information, retrieve the DX information relating to the API variation, and provide the DX information to the developer in response.

API service 530 may handle API calls received over network interface 506. For example, API service 530 may perform basic API functionality of identifying data and/or code relevant to an API call, retrieving and/or executing the data and/or code, and providing data and/or code in response to the API call. In some embodiments, API service 530 identifies a relevant API variation, and responds to the API call using data and/or code associated with the relevant API variation.

Note, descriptions of embodiments of the present disclosure are presented above for purposes of illustration, but embodiments of the present disclosure are not intended to be limited to any of the disclosed embodiments. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

In the preceding, reference is made to embodiments presented in this disclosure. However, the scope of the present disclosure is not limited to specific described embodiments. Instead, any combination of the preceding features and elements, whether related to different embodiments or not, is contemplated to implement and practice contemplated embodiments. Furthermore, although embodiments disclosed herein may achieve advantages over other possible solutions or over the prior art, whether or not a particular advantage is achieved by a given embodiment is not limiting of the scope of the present disclosure. Thus, the aspects, features, embodiments and advantages discussed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

Aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples a computer readable storage medium include: an electrical connection having one or more wires, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the current context, a computer readable storage medium may be any tangible medium that can contain or store a program.

While the foregoing is directed to embodiments of the present disclosure, other and further embodiments of the disclosure may be devised without departing from the basic scope thereof, and the scope thereof is determined by the claims that follow.

## Claims

1. A computer-implemented method for providing developer experience information specific to a variation of an application programming interface, API,
comprising:
receiving (210) a request from a developer for developer experience information related to the API, wherein the request comprises developer credentials;
identifying (220), based on the request and a stored correlation between one or more developer characteristics and the API variation, an API variation that is relevant to the developer by determining the one or more developer characteristics based on a user profile accessed using the developer credentials provided with the request, wherein the API variation corresponds to a particular set of developer experience information available for a particular set of developer characteristics;
selecting (230), based on the API variation, the developer experience information specific to the API variation, wherein the developer experience information comprises at least one of: API documentation; and one or more software development kit, SDK, libraries; and
providing (240) the developer with the developer experience information via a custom developer experience interface in order to assist the developer in using the API variation.

2. The computer-implemented method of claim 1, wherein the one or more developer characteristics comprise at least one of: a geographic region, an industry, and a market.

3. The computer-implemented method of claim 1, wherein the custom developer experience interface further comprises:
a testing sandbox environment specific to the API variation.

4. The computer-implemented method of claim 1, wherein the custom developer experience interface further comprises:
support data specific to the API variation.

5. A system, comprising:
a processor; and
memory storing instructions which, when executed on one or more processors, performs a method for providing developer experience information specific to a variation of an application programming interface, API, the method comprising:
receiving (210) a request from a developer for developer experience information related to the API, wherein the request comprises developer credentials;
identifying (220), based on the request and a stored correlation between one or more developer characteristics and the API variation, an API variation that is relevant to the developer by determining the one or more developer characteristics based on a user profile accessed using the developer credentials provided with the request, wherein the API variation corresponds to a particular set of developer experience information available for a particular set of developer characteristics;
selecting (230), based on the API variation, the developer experience information specific to the API variation, wherein the developer experience information comprises at least one of: API documentation; and one or more software development kit, SDK, libraries; and
providing (240) the developer with the developer experience information via a custom developer experience interface in order to assist the developer in using the API variation.

6. The system of claim 5, wherein the one or more developer characteristics comprise at least one of: a geographic region, an industry, and a market.

7. The system of claim 5, wherein the custom developer experience interface further comprises:
a testing sandbox environment specific to the API variation.

8. The system of claim 5, wherein the custom developer experience interface further comprises:
support data specific to the API variation.

9. A non-transitory computer-readable medium comprising instructions which, when executed on one or more processors, cause the one or more processors to become configured to carry out the method of any of claims 1 to 4.

## Patentansprüche

1. Computerimplementiertes Verfahren zum Bereitstellen von Entwicklererfahrungsinformationen, die sich speziell auf eine Variation einer Anwendungsprogrammierschnittstelle, API, beziehen, das Folgendes umfasst:
Empfangen (210) einer Anforderung von Entwicklererfahrungsinformationen, die die API betreffen, von einem Entwickler, wobei die Anforderung Entwickleranmeldedaten umfasst;
Identifizieren (220) einer API-Variation, die für den Entwickler relevant ist, auf Basis der Anforderung und einer gespeicherten Korrelation zwischen einer oder mehreren Entwicklereigenschaften und der API-Variation durch Bestimmen der einen oder der mehreren Entwicklereigenschaften auf Basis eines Benutzerprofils, auf das unter Verwendung der Entwickleranmeldedaten zugegriffen wird, die mit der Anforderung bereitgestellt werden, wobei die API-Variation einem speziellen Satz von Entwicklererfahrungsinformationen entspricht, die für einen speziellen Satz von Entwickleranmeldedaten verfügbar sind;
Auswählen (230) der Entwicklererfahrungsinformationen, die sich speziell auf die API-Variation beziehen, auf Basis der API-Variation, wobei die Entwicklererfahrungsinformationen mindestens eines von Folgendem umfassen: API-Dokumentation und eine oder mehrere Softwareentwicklungskit(SDK)-Bibliotheken; und Bereitstellen (240) die Entwicklererfahrungsinformationen via eine benutzerdefinierte Entwicklererfahrungsschnittstelle für den Entwickler, um den Entwickler bei der Verwendung der API-Variation zu unterstützen.

2. Computerimplementiertes Verfahren nach Anspruch 1, wobei die eine oder die mehreren Entwicklereigenschaften mindestens eines von Folgendem umfassen: eine geografische Region, eine Branche und einen Markt.

3. Computerimplementiertes Verfahren nach Anspruch 1, wobei die benutzerdefinierte Entwicklererfahrungsschnittstelle ferner Folgendes umfasst:
eine Sandkastentestumgebung, die sich speziell auf die API-Variation bezieht.

4. Computerimplementiertes Verfahren nach Anspruch 1, wobei die benutzerdefinierte Entwicklererfahrungsschnittstelle ferner Folgendes umfasst:
Unterstützungsdaten, die sich speziell auf die API-Variation beziehen.

5. System, das Folgendes umfasst:
einen Prozessor; und
einen Speicher, in dem Anweisungen gespeichert sind, die, wenn sie auf einem oder mehreren Prozessoren ausgeführt werden, ein Verfahren zum Bereitstellen von Entwicklererfahrungsinformationen durchführt, die sich speziell auf eine Variation einer Anwendungsprogrammierschnittstelle, API, beziehen, wobei das Verfahren Folgendes umfasst:
Empfangen (210) einer Anforderung von Entwicklererfahrungsinformationen, die die API betreffen, von einem Entwickler, wobei die Anforderung Entwickleranmeldedaten umfasst;
Identifizieren (220) einer API-Variation, die für den Entwickler relevant ist, auf Basis der Anforderung und einer gespeicherten Korrelation zwischen einer oder mehreren Entwicklereigenschaften und der API-Variation durch Bestimmen der einen oder der mehreren Entwicklereigenschaften auf Basis eines Benutzerprofils, auf das unter Verwendung der Entwickleranmeldedaten zugegriffen wird, die mit der Anforderung bereitgestellt werden, wobei die API-Variation einem speziellen Satz von Entwicklererfahrungsinformationen entspricht, die für einen speziellen Satz von Entwickleranmeldedaten verfügbar sind;
Auswählen (230) der Entwicklererfahrungsinformationen, die sich speziell auf die API-Variation beziehen, auf Basis der API-Variation, wobei die Entwicklererfahrungsinformationen mindestens eines von Folgendem umfassen: API-Dokumentation und eine oder mehrere Softwareentwicklungskit(SDK)-Bibliotheken; und
Bereitstellen (240) die Entwicklererfahrungsinformationen via eine benutzerdefinierte Entwicklererfahrungsschnittstelle für den Entwickler, um den Entwickler bei der Verwendung der API-Variation zu unterstützen.

6. System nach Anspruch 5, wobei die eine oder die mehreren Entwicklereigenschaften mindestens eines von Folgendem umfassen: eine geografische Region, eine Branche und einen Markt.

7. System nach Anspruch 5, wobei die benutzerdefinierte Entwicklererfahrungsschnittstelle ferner Folgendes umfasst:
eine Sandkastentestumgebung, die sich speziell auf die API-Variation bezieht.

8. System nach Anspruch 5, wobei die benutzerdefinierte Entwicklererfahrungsschnittstelle ferner Folgendes umfasst:
Unterstützungsdaten, die sich speziell auf die API-Variation beziehen.

9. Nichttransitorisches computerlesbares Medium, das Anweisungen umfasst, die, wenn sie auf einem oder mehreren Prozessoren ausgeführt werden, den einen oder die mehreren Prozessoren veranlassen, zum Umsetzen des Verfahrens nach einem der Ansprüche 1 bis 4 ausgelegt zu werden.

## Revendications

1. Procédé mis en œuvre par ordinateur pour fournir des informations d'expérience de développeur spécifiques à une variante d'une interface de programmation d'application, API, comprenant :
la réception (210) d'une demande provenant d'un développeur pour des informations d'expérience de développeur relatives à l'API, dans lequel la demande comprend des justificatifs d'identité de développeur ;
l'identification (220), sur la base de la demande et d'une corrélation stockée entre une ou plusieurs caractéristiques de développeur et la variante d'API, d'une variante d'API qui est adaptée au développeur par la détermination de la ou des caractéristiques de développeur sur la base d'un profil d'utilisateur accédé au moyen des justificatifs d'identité de développeur fournis avec la demande, dans lequel la variante d'API correspond à un ensemble particulier d'informations d'expérience de développeur disponibles pour un ensemble particulier de caractéristiques de développeur ;
la sélection (230), sur la base de la variante d'API, des informations d'expérience de développeur spécifiques à la variante d'API, dans lequel les informations d'expérience de développeur comprennent au moins l'un des éléments suivants : une documentation d'API ; et une ou plusieurs bibliothèques de kits de développement logiciel, SDK ; et
la fourniture (240) au développeur des informations d'expérience de développeur par le biais d'une interface personnalisée d'expérience de développeur afin d'aider le développeur à utiliser la variante d'API.

2. Procédé mis en œuvre par ordinateur selon la revendication 1, dans lequel la ou les caractéristiques de développeur comprennent au moins l'un des éléments suivants : une région géographique, une industrie et un marché.

3. Procédé mis en œuvre par ordinateur selon la revendication 1, dans lequel l'interface personnalisée d'expérience de développeur comprend en outre :
un environnement de bac à sable de test spécifique à la variante d'API.

4. Procédé mis en œuvre par ordinateur selon la revendication 1, dans lequel l'interface personnalisée d'expérience de développeur comprend en outre :
des données de support spécifiques à la variante d'API.

5. Système comprenant :
un processeur ; et
une mémoire stockant des instructions qui, lorsqu'elles sont exécutées sur un ou plusieurs processeurs, exécutent un procédé de fourniture d'informations d'expérience de développeur spécifiques à une variante d'une interface de programmation d'application, API, le procédé comprenant :
la réception (210) d'une demande provenant d'un développeur pour des informations d'expérience de développeur relatives à l'API, dans lequel la demande comprend des justificatifs d'identité de développeur ;
l'identification (220), sur la base de la demande et d'une corrélation stockée entre une ou plusieurs caractéristiques de développeur et la variante d'API, d'une variante d'API qui est adaptée au développeur par la détermination de la ou des caractéristiques de développeur sur la base d'un profil d'utilisateur accédé au moyen des justificatifs d'identité de développeur fournis avec la demande, dans lequel la variante d'API correspond à un ensemble particulier d'informations d'expérience de développeur disponibles pour un ensemble particulier de caractéristiques de développeur ;
la sélection (230), sur la base de la variante d'API, des informations d'expérience de développeur spécifiques à la variante d'API, dans lequel les informations d'expérience de développeur comprennent au moins l'un des éléments suivants : une documentation d'API ; et une ou plusieurs bibliothèques de kits de développement logiciel, SDK ; et
la fourniture (240) au développeur des informations d'expérience de développeur par le biais d'une interface personnalisée d'expérience de développeur afin d'aider le développeur à utiliser la variante d'API.

6. Système selon la revendication 5, dans lequel la ou les caractéristiques de développeur comprennent au moins l'un des éléments suivants : une région géographique, une industrie et un marché.

7. Système selon la revendication 5, dans lequel l'interface personnalisée d'expérience de développeur comprend en outre :
un environnement de bac à sable de test spécifique à la variante d'API.

8. Système selon la revendication 5, dans lequel l'interface personnalisée d'expérience de développeur comprend en outre :
des données de support spécifiques à la variante d'API.

9. Support non transitoire lisible par ordinateur comprenant des instructions qui, lorsqu'elles sont exécutées sur un ou plusieurs processeurs, amènent le ou les processeurs à se configurer pour exécuter le procédé selon l'une quelconque des revendications 1 à 4.
